# FASCICULE DE BREVET EUROPEEN

(11) **EP 4 288 650 B1**
(45) Date de publication et mention de la délivrance du brevet: **02.04.2025**
(21) Numéro de dépôt: 22705433.5
(22) Date de dépôt: 21.01.2022
(51) Int. Cl.: F02C 6/08, F02C 7/28, F01D 17/10, F04D 27/02

(54) **DISPOSITIF D'ÉTANCHÉITÉ POUR VANNE DE DÉCHARGE D'UNE TURBOMACHINE**
DICHTUNGSVORRICHTUNG FÜR EIN AUSLASSVENTIL EINER TURBOMASCHINE
SEALING DEVICE FOR A DISCHARGE VALVE OF A TURBOMACHINE

(30) Priorité: 03.02.2021 FR 2101024
(43) Date de publication de la demande: 13.12.2023
(73) Titulaire: SAFRAN AIRCRAFT ENGINES, 75015 Paris (FR)
(72) Inventeur: MOHAMED, Azath, 77550 Moissy-Cramayel (FR); BRANCO, Alexandre, 77550 Moissy-Cramayel (FR); PAPIN, Thierry Georges Paul, 77550 Moissy-Cramayel (FR); COLLIN, Virginie Martine, 77550 Moissy-Cramayel (FR)
(74) Mandataire: Gevers & Orès
(86) Numéro de dépôt international: PCT/FR2022/050120
(87) Numéro de publication internationale: WO 2022/167742

(56) Documents cités:
- EP-A1- 0 374 004
- FR-A1- 3 089 270
- FR-A1- 3 096 083

## Description

### DOMAINE TECHNIQUE DE L'INVENTION

Le domaine de l'invention est celui des vannes de décharge de carter de turbomachine, et notamment de carter intermédiaire de turbomachine.

La présente invention se rapporte plus particulièrement à un dispositif d'étanchéité d'une vanne de décharge de turbomachine, et à une vanne de turbomachine comportant un tel dispositif d'étanchéité.

### ARRIERE-PLAN TECHNIQUE

L'arrière-plan technique comprend notamment les documents EP 0 374 004 A1, FR 3 096 083 A1 et FR 3 089 270 A1.

Dans une turbomachine, des vannes de décharge, également connues sous leur acronyme VDV pour Vanne à Décharge Variable (ou encore VBV pour Variable Bleed Valve en langue anglaise) sont généralement montées sur le moyeu d'un carter intermédiaire d'une turbomachine à double flux, positionné entre le compresseur basse-pression et le compresseur haute pression. Les vannes de décharge sont positionnées dans un espace annulaire interveine du moyeu du carter intermédiaire s'étendant entre une veine d'écoulement principale (veine primaire) dans laquelle circule un flux d' air primaire et une veine d'écoulement secondaire (veine secondaire) dans laquelle circule un flux d'air secondaire.

Leur ouverture et leur fermeture servent alors à régler un débit de fuite d'air en fonction des conditions d'utilisation de la turbomachine, par exemple pour éviter le pompage. Ces vannes de décharge sont régulièrement réparties sur le moyeu du carter intermédiaire autour de l'axe longitudinal de la turbomachine et comprennent chacune une porte montée pivotante autour d'un axe, de manière à être déplaçable angulairement par rapport au carter intermédiaire, entre une position d'obturation dans laquelle la porte obture un orifice de passage d'air ménagé dans le moyeu du carter intermédiaire et une position d'ouverture de cet orifice.

Un anneau de commande, est positionné à l'extérieur de la veine entre le carter du compresseur et un capot externe de la turbomachine et permet de commander l'ouverture et la fermeture des portes de décharge. La rotation de celui-ci actionne des dispositifs d'actionnement par leviers entraînant les portes de décharge.

Les vannes de décharge assurent l'étanchéité entre la veine primaire et la veine secondaire dans leur position d'obturation et permettent l'évacuation d'une partie du flux d'air primaire hors de la veine primaire dans certaines conditions de fonctionnement dans leur position d'ouverture. La partie du flux d'air primaire prélevée est soit réinjectée dans le flux d'air secondaire, soit utilisée pour alimenter des systèmes de refroidissement ou pour ventiler des composants de la turbomachine. Pour assurer l'étanchéité entre la veine primaire et la veine secondaire dans la position de fermeture des portes de décharge, la paroi du carter intermédiaire bordant l'orifice de passage d'air présente un joint d'étanchéité, par exemple en élastomère, s'étendant sur le pourtour de la paroi bordant l'orifice. Le joint d'étanchéité est destiné à venir en appui, dans la position de fermeture de la vanne de décharge, contre des bords périphériques de chaque porte.

Toutefois, dans la position d'ouverture de la porte de décharge, le joint d'étanchéité n'est plus en compression contre la porte de décharge. De ce fait, il s'étend dans le flux d'air pouvant engendrer une diminution de la section de passage du flux aérodynamique d'air écopé.

Une solution à ce problème serait d'augmenter l'ouverture de la porte de la vanne de décharge. Cependant, l'angle d'ouverture de la porte est très limité et ne permet pas de compenser cette perte en flux d'air écopé.

Dans ce contexte, l'invention vise à proposer une solution permettant de résoudre ces inconvénients.

### RÉSUMÉ DE L'INVENTION

À cet effet, l'invention concerne une vanne de décharge pour une turbomachine d'aéronef, comprenant une porte de décharge destinée à être montée pivotante autour d'un axe entre une position d'obturation d'un orifice de passage d'air et une position ouverte dudit orifice, l'orifice étant ménagé dans un carter intermédiaire de la turbomachine, la vanne de décharge comprenant un dispositif d'étanchéité comportant :
- un joint d'étanchéité configuré pour être monté mobile sur le carter intermédiaire, et
- un système de déplacement configuré pour déplacer le joint d'étanchéité entre une première position dans laquelle le joint d'étanchéité est destiné à être en appui contre la porte de décharge lorsque la porte est en position d'obturation et une seconde position dans laquelle le joint d'étanchéité est rétracté par rapport à l'orifice de passage d'air lorsque la porte est en position ouverte.

Ainsi, cette solution permet d'atteindre l'objectif susmentionné. En particulier, l'invention permet d'assurer l'étanchéité entre le carter intermédiaire et la porte d'une vanne de décharge en position de fermeture tout en évitant l'obstruction du flux d'air aérodynamique lorsque la porte est dans la position ouverte.

En effet, grâce à l'invention, le joint d'étanchéité est ainsi avantageusement escamoté ou rétracté lorsque la porte de décharge est en position d'ouverture évitant ainsi de s'étendre dans le flux d'air lorsque le joint d'étanchéité n'est plus compressé contre la porte. Ainsi, toute la section de passage du flux aérodynamique d'air entre la porte de décharge et le carter intermédiaire est conservée sans être pénalisée par le volume occupé par le joint d'étanchéité.

La vanne de décharge selon l'invention peut également présenter une ou plusieurs des caractéristiques ci-dessous, considérées individuellement ou selon toutes les combinaisons techniquement possibles :
- le système de déplacement est commandé, de préférence mécaniquement, par l'ouverture ou la fermeture de la porte de décharge ;
- le système de déplacement comporte un support de joint configuré pour être monté coulissant dans une cavité ménagée dans le carter intermédiaire débouchant dans l'orifice de passage d'air et un actionneur configuré pour faire passer le joint d'étanchéité de la première position vers la seconde position lorsqu'il est actionné par l'ouverture de la porte de décharge et de la seconde position vers la première position lorsqu'il est actionné par la fermeture de la porte de décharge, le joint d'étanchéité étant logé dans la cavité du carter intermédiaire dans la seconde position ;
- le système de déplacement comporte une biellette configurée pour être montée pivotante autour d'un axe dans la cavité du carter intermédiaire, la biellette étant articulée à une extrémité sur un axe solidaire du support du joint d'étanchéité et commandée à l'autre extrémité par l'action d'un ressort formant actionneur, le ressort étant configuré pour rappeler la biellette dans une position selon laquelle le joint d'étanchéité est maintenu dans la seconde position lorsque la porte de décharge est en position ouverte et pour être compressé par la porte de décharge lorsqu'elle est en position d'obturation de manière à pivoter la biellette dans une position selon laquelle le joint d'étanchéité est maintenu dans la première position ;

- le dispositif d'étanchéité comporte une butée configurée pour être fixée à la porte de décharge de manière à compresser le ressort lorsque la porte est en position d'obturation ;
- la porte de décharge est configurée pour faire saillie radialement vers l'intérieur du carter intermédiaire en position ouverte définissant un volume d'écopage et la butée est destinée à être fixée à la porte de décharge en dehors dudit volume d'écopage.

Un autre objet de l'invention concerne un carter intermédiaire de turbomachine comportant une pluralité de vannes de décharge selon l'invention assurant l'étanchéité au niveau d'une pluralité d'orifices de passage d'air.

L'invention concerne en outre une turbomachine comportant un compresseur basse-pression, un compresseur haute-pression et un carter intermédiaire tel que décrit précédemment et positionné longitudinalement entre le compresseur basse-pression et le compresseur haute-pression.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 illustre schématiquement, en coupe axiale une turbomachine à double flux à laquelle s'applique l'invention ;
- la figure 2 est une vue simplifiée en coupe d'un carter intermédiaire de la turbomachine de la figure 1 ;
- la figure 3 est une vue simplifiée en coupe d'une portion d'une vanne de décharge de turbomachine illustrant le comportement du joint d'étanchéité selon l'invention en position de fermeture de la porte de décharge ; et
- la figure 4 représente schématiquement en coupe la portion de la vanne de décharge de turbomachine de la figure 3 illustrant le comportement du joint d'étanchéité selon l'invention en position d'ouverture de la porte de décharge.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

### DESCRIPTION DES MODES DE RÉALISATION

Un dispositif d'étanchéité auquel s'adresse l'invention est par exemple installé dans une turbomachine d'aéronef, notamment à double flux, comportant un compresseur basse pression.

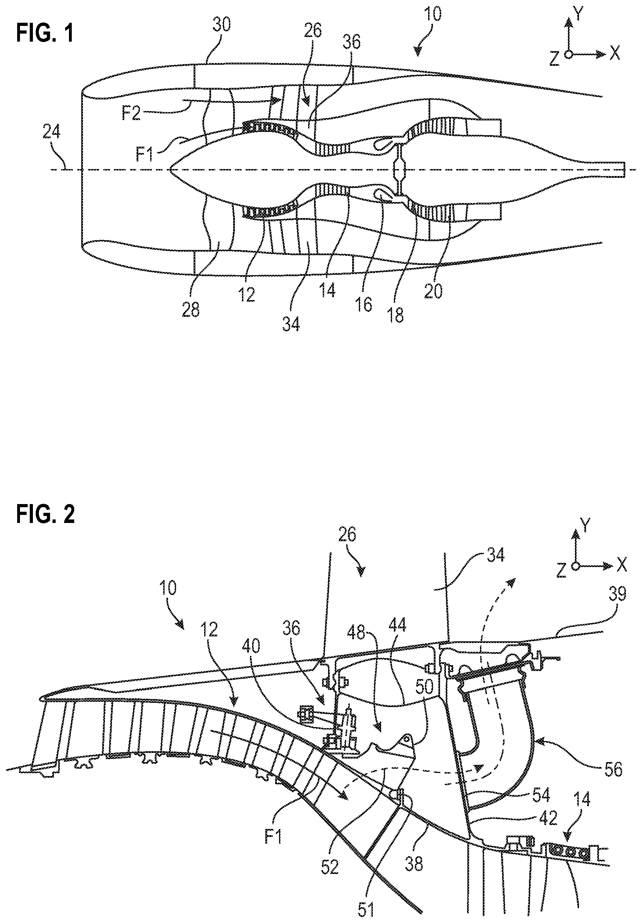

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « interne » et « externe » sont définis par rapport à un axe radial Y perpendiculaire à l'axe longitudinal X et au regard de l'éloignement par rapport à l'axe longitudinal X.

Comme l'illustre la figure 1 qui est une vue schématique en coupe axiale d'une turbomachine à double flux ou double corps 10, une telle turbomachine comporte en général, de l'amont vers l'aval selon la direction d'écoulement des gaz, un compresseur basse pression 12, un compresseur haute pression 14, une chambre de combustion 16, une turbine haute pression 18 et une turbine basse pression 20, qui définissent une veine d'écoulement d'un flux primaire de gaz F1.

La turbine haute pression 18 est solidaire du compresseur haute pression 14 de manière à former un corps haute pression, tandis que la turbine basse pression 20 est solidaire du compresseur basse pression 12 de manière à former un corps basse pression, de sorte que chaque turbine entraîne le compresseur associé en rotation autour de l'axe longitudinal 24 de la turbomachine sous l'effet de la poussée des gaz provenant de la chambre de combustion 16.

Dans une telle turbomachine 10, un carter intermédiaire 26 est habituellement interposé entre le compresseur basse pression 12, situé en amont, et le compresseur haute pression 14, situé en aval. Le carter intermédiaire 26 a une forme générale cylindrique ou tronconique.

Dans le cas des turbomachines à double flux, qui comprennent une soufflante 28 carénée par une nacelle 30 pour générer un flux secondaire F2, le carter intermédiaire 26 comporte en général des bras 34 traversant la veine d'écoulement de ce flux secondaire 32.

La figure 2 illustre une vue simplifiée d'un carter intermédiaire 26 sur lequel des vannes de décharge 48 sont montées au niveau du moyeu 36 du carter intermédiaire 26. Ce moyeu 36 comporte deux viroles annulaires coaxiales, respectivement interne 38 et externe 44, et deux parois radiales ou flasques, respectivement amont 40 et aval 42, reliant les viroles interne 38 et externe 44. La virole interne 38 délimite la partie externe par rapport à l'axe 24 de l'espace d'écoulement primaire, ou veine primaire, du flux primaire F1 de la turbomachine.

Par ailleurs, ce moyeu 36 est équipé d'une rangée annulaire de vannes de décharge 48, dont l'une est visible en coupe sur la figure 2. Sur cette figure apparaît plus spécifiquement la porte 50 de la vanne 48, qui est montée pivotante autour d'un axe 51, de manière à être déplaçable entre une position d'ouverture et une position de fermeture d'un orifice correspondant formé dans la virole interne 38 du moyeu 36.

Chacun des orifices 60 d'entrée d'air de décharge, de forme sensiblement parallélépipédique, est associé à une vanne de décharge 48 destinée à la régulation du débit du compresseur haute pression 14.

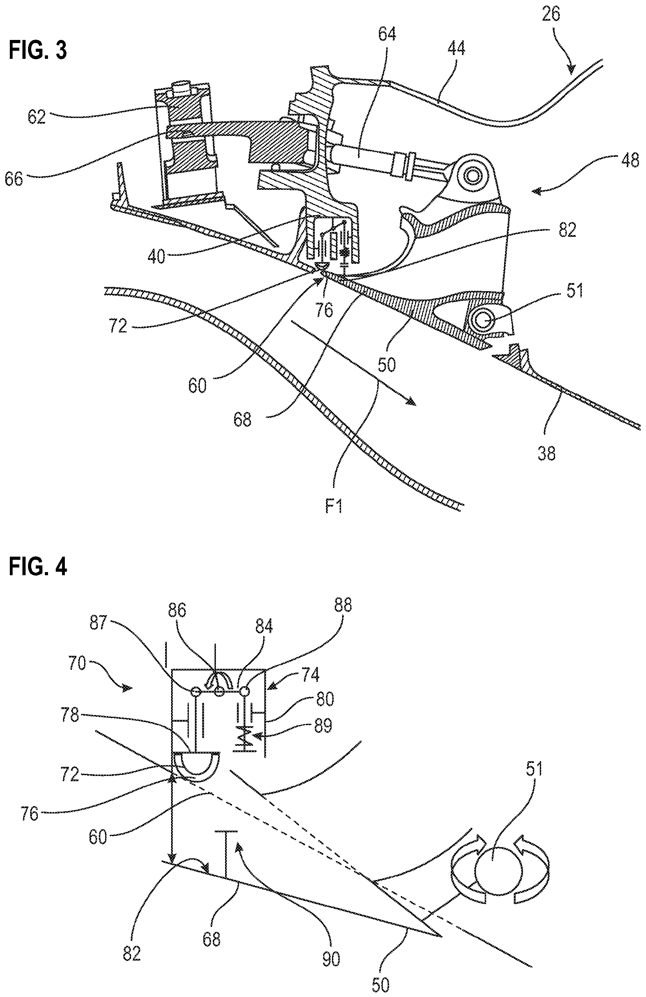

Un dispositif de commande de l'ouverture et la fermeture des portes de décharge est davantage visible sur la figure 3 et comporte un anneau circulaire monobloc 62 permettant de commander l'ouverture ou la fermeture des portes de décharge en fonction des conditions d'utilisation de la turbomachine. Cet anneau 62 est centré sur l'axe longitudinal 24 de la turbomachine et placé dans l'espace entourant le carter 26. La mise en rotation de l'anneau de commande 62 est effectuée par des actionneurs qui sont également situés à l'extérieur du carter 26. La rotation de l'anneau de commande 62 actionne des dispositifs d'actionnement par leviers entraînant les portes de décharge 50. Ainsi, pour chaque porte de décharge 50, un dispositif d'actionnement par leviers 64 est fixé par une attache 66 à l'anneau de commande, de manière à transformer le mouvement de rotation de l'anneau 62 autour de l'axe 24 du carter en un mouvement d'ouverture ou de fermeture de la porte 50. L'attache 66 est agencée pour former une liaison adaptée entre l'anneau de commande 62 et les éléments du dispositif de leviers 64. Ici, il s'agit d'une liaison pivot autour d'un axe sensiblement radial entre l'anneau de commande 62 et un guignol du dispositif de leviers 64. L'ouverture de chaque vanne 48 entraîne la décharge d'un flux d'air (flèche 52 en traits pointillés) dans l'espace annulaire délimité par les viroles 38, 44 et les parois radiales 40, 42.

La paroi radiale aval 42 délimite, quant à elle, la partie interne par rapport à l'axe X de l'espace d'écoulement secondaire, veine secondaire, du flux secondaire F2. Elle comprend une rangée annulaire d'orifices 54 de passage des flux d'air 52 de décharge, vers l'aval. Comme on le voit en figure 2, des conduits de décharge 56 sont montés en aval du carter intermédiaire 26 et sont chacun destinés à guider un flux d'air 52 provoqué par l'ouverture d'une vanne de décharge 48, le flux d'air étant guidé depuis la sortie des orifices 54 jusqu'à la veine d'écoulement du flux secondaire F2.

La figure 3 représente de manière plus précise une portion d'une vanne de décharge 48 d'un carter intermédiaire 26 de turbomachine 10 selon l'invention.

Chaque porte de décharge 50 a une forme sensiblement parallélépipédique complémentaire de celle de l'orifice 60 d'entrée d'air de décharge correspondant. La porte 50 a pour fonction d'assurer une étanchéité entre le flux primaire F1 et le flux secondaire F2 et d'autoriser un débit de décharge entre le flux primaire F1 et le flux secondaire F2 en fonction d'un programme de pilotage de la vanne de décharge 48.

La porte de décharge 50 est configurée pour pivoter autour d'un axe transversal 51 qui est sensiblement tangent au carter intermédiaire 26 et qui s'étend sensiblement le long du bord périphérique aval de la porte 50 dans les exemples illustrés sur les figures.

La porte 50 est donc mobile angulairement par pivotement autour de l'axe transversal 51 entre une position de fermeture, ou d'obturation, et une position d'ouverture de cet orifice 60.

Dans la position de fermeture, la surface intérieure 68 de la porte 50 est alignée avec la surface de la virole annulaire interne 38 du carter intermédiaire 26.

Dans la position d'ouverture, la porte 50 est inclinée selon un angle de 60° environ vers l'intérieur du carter intermédiaire 12 par rapport à sa position de fermeture, comme cela est davantage visible sur la figure 4. Ainsi, la porte de décharge 50 est configurée pour faire saillie radialement vers l'intérieur du carter intermédiaire 26 en position ouverte définissant un volume d'écopage.

De manière à assurer l'étanchéité de la veine primaire dans la position de fermeture de la porte de décharge 50, celle-ci comporte un dispositif d'étanchéité 70 équipé d'un joint d'étanchéité 72 configuré pour être monté mobile sur le carter intermédiaire 26 et un système de déplacement 74 configuré pour déplacer le joint d'étanchéité 72 par rapport au carter intermédiaire 26. En particulier, le système de déplacement 74 est configuré pour déplacer le joint d'étanchéité 72 entre une première position, dite étendue, dans laquelle le joint d'étanchéité 72 est en appui contre la porte de décharge 50 lorsque la porte est en position d'obturation et une seconde position, dite rétractée, dans laquelle le joint d'étanchéité 72 est rétracté par rapport à l'orifice 60 de passage d'air lorsque la porte 50 est en position ouverte.

Le joint d'étanchéité 72 s'étend longitudinalement dans une direction transversale qui est sensiblement tangente au carter intermédiaire 26 et qui s'étend sensiblement le long du bord périphérique amont de la porte de décharge 50 de sorte à venir en appui contre celui-ci, dans la position de fermeture de la porte de décharge illustré sur la figure 3. Il présente sur toute sa longueur un bourrelet ou partie bombée 76 dirigée vers l'intérieur du carter intermédiaire 26 et destiné à être compressé par la porte de décharge 50 lorsque celle-ci est en position de fermeture afin de garantir l'étanchéité de la vanne de décharge 48.

Le système de déplacement 74 est commandé, de préférence mécaniquement, par l'ouverture ou la fermeture de la porte de décharge 50.

A cet effet, le système de déplacement 74 comporte un support de joint 78 de forme adaptée à celle du joint 74 afin de supporter l'ensemble du joint. Une face plane du joint d'étanchéité opposée à la partie bombée 76 est maintenue au support 78 par collage.

Le support 78 est monté coulissant dans une cavité 80 ménagée dans le carter intermédiaire 26.

La cavité 80 s'étend longitudinalement dans une direction transversale qui est sensiblement tangente au carter intermédiaire 26 et s'étend sensiblement le long du bord périphérique amont de l'orifice de passage d'air 60 et présente en outre une profondeur selon une direction radiale. La cavité 80 est ainsi conformée pour loger le joint d'étanchéité 72 dans la seconde position, c'est-à-dire lorsque la porte est ouverte. De plus, la cavité 80 est ouverte à une extrémité et débouche dans l'orifice 60 de passage d'air afin de permettre au joint d'étanchéité 72 de faire saillie radialement dans l'orifice de passage 60 pour venir en appui contre une surface externe 82 de la porte 50 lorsque celle-ci est en position de fermeture.

Le système de déplacement 74 comporte une biellette 84 configurée pour être montée pivotante autour d'un axe 86 transversal sensiblement tangent au carter intermédiaire 26 dans la cavité 80. La biellette 84 est en outre articulée à une extrémité sur un axe 87 solidaire du support 78 du joint d'étanchéité et commandée à l'autre extrémité par un actionneur.

L'actionneur est configuré pour faire passer le joint d'étanchéité 72 de la première position étendue vers la seconde position rétractée lorsqu'il est actionné par l'ouverture de la porte de décharge 50 et de la seconde position rétractée, vers la première position étendue lorsqu'il est actionné par la fermeture de la porte de décharge 50.

De préférence, l'actionneur est un ressort 89 configuré pour rappeler la biellette 84 dans une position selon laquelle le joint d'étanchéité 72 est maintenu dans la position rétractée. La biellette 84 est ainsi articulée à l'autre extrémité sur un axe 88 solidaire d'une extrémité du ressort 89.

Le ressort 89 est en outre configuré pour être compressé par la porte de décharge 50 lorsqu'elle est en position d'obturation de manière à ce que la biellette soit pivotée dans une position selon laquelle le joint d'étanchéité 72 est maintenu dans la première position étendue.

Le dispositif d'étanchéité 70 comporte avantageusement une butée 90 fixée à la porte de décharge 50 et qui s'étend longitudinalement selon une direction radiale de manière à compresser le ressort 89 lorsque la porte est en position d'obturation. Ainsi, c'est directement la porte 50 elle-même qui vient mettre en mouvement la cinématique du joint d'étanchéité 72 rétractable. De préférence, la butée 90 est fixée à la porte de décharge 72 en dehors du volume d'écopage afin de maximiser le flux d'air écopé par la porte de décharge.

En fonctionnement, lorsque la porte 50 de la vanne de décharge est fermée, telle qu'illustrée sur la figure 3, le ressort 89 est compressé par la porte de décharge 50, de préférence par l'intermédiaire de la butée 90. Ainsi, la biellette 84 est maintenue pivotée par le ressort dans une position telle que le joint d'étanchéité 72 est maintenu dans la première position étendue, c'est-à-dire faisant saillie radialement dans l'orifice de passage 60 et étant en appui contre la surface externe 82 de la porte 50, sa partie bombée 76 étant compressée.

Lorsque la porte 50 de la vanne de décharge s'ouvre (voir figure 4), elle ne compresse plus le ressort 89 qui se détend et fait ainsi pivoter la biellette 84 autour de l'axe transversal 86 de sorte à faire coulisser le support 78 de joint et escamotant ainsi le joint d'étanchéité 72 dans la cavité 80 à l'extérieur de l'orifice de passage d'air 60.

Ainsi, le joint d'étanchéité ne s'étend plus dans la section de passage du flux aérodynamique d'air maximisant ainsi le flux d'air écopé par la porte.

L'invention telle que décrite précédemment propose une solution compacte garantissant l'étanchéité entre le carter intermédiaire et la porte d'une vanne de décharge en position de fermeture tout en évitant l'obstruction du flux d'air aérodynamique lorsque la porte est dans la position ouverte.

## Revendications

1. Vanne de décharge (48) pour une turbomachine d'aéronef (10), comprenant une porte de décharge (50) destinée à être montée pivotante autour d'un axe (51) entre une position d'obturation d'un orifice (60) de passage d'air et une position ouverte dudit orifice, l'orifice étant ménagé dans un carter intermédiaire (26) de la turbomachine, la vanne de décharge comportant un dispositif d'étanchéité (70), la vanne de décharge étant **caractérisée en ce que** le dispositif d'étanchéité (70) comporte :
- un joint d'étanchéité (72) configuré pour être monté mobile sur le carter intermédiaire (26), et
- un système de déplacement (74) configuré pour déplacer le joint d'étanchéité (72) entre une première position dans laquelle le joint d'étanchéité (72) est destiné à être en appui contre la porte de décharge (50) lorsque la porte est en position d'obturation et une seconde position dans laquelle le joint d'étanchéité (72) est rétracté par rapport à l'orifice de passage d'air (60) lorsque la porte de décharge (50) est en position ouverte.

2. Vanne de décharge selon la revendication 1, dans laquelle le système de déplacement (74) est commandé par l'ouverture ou la fermeture de la porte de décharge (50).

3. Vanne de décharge selon la revendication 2, dans laquelle le système de déplacement (74) comporte un support (78) de joint configuré pour être monté coulissant dans une cavité (80) ménagée dans le carter intermédiaire (26) débouchant dans l'orifice de passage d'air (60) et un actionneur configuré pour faire passer le joint d'étanchéité (72) de la première position vers la seconde position lorsqu'il est actionné par l'ouverture de la porte de décharge (50) et de la seconde position vers la première position lorsqu'il est actionné par la fermeture de la porte de décharge, le joint d'étanchéité (72) étant logé dans la cavité (80) du carter intermédiaire (26) dans la seconde position.

4. Vanne de décharge selon la revendication 3, dans laquelle le système de déplacement (74) comporte une biellette (84) configurée pour être montée pivotante autour d'un axe (86) dans la cavité (80) du carter intermédiaire (26), la biellette (84) étant articulée à une extrémité sur un axe (87) solidaire du support (78) du joint d'étanchéité (72) et commandée à l'autre extrémité par l'action d'un ressort (89) formant actionneur, le ressort (89) étant configuré pour rappeler la biellette (84) dans une position selon laquelle le joint d'étanchéité (72) est maintenu dans la seconde position lorsque la porte de décharge (50) est en position ouverte et pour être compressé par la porte de décharge (50) lorsqu'elle est en position d'obturation de manière à pivoter la biellette (84) dans une position selon laquelle le joint d'étanchéité (72) est maintenu dans la première position.

5. Vanne de décharge selon la revendication 4, comportant une butée (90) configurée pour être fixée à la porte de décharge (50) de manière à compresser le ressort (89) lorsque la porte de décharge (50) est en position d'obturation.

6. Vanne de décharge selon la revendication 5, dans laquelle la porte de décharge (50) est configurée pour faire saillie radialement vers l'intérieur du carter intermédiaire (26) en position ouverte définissant un volume d'écopage et la butée (90) est destinée à être fixée à la porte de décharge en dehors dudit volume d'écopage.

7. Carter intermédiaire (26) de turbomachine comportant une pluralité de vannes de décharge (48) selon l'une quelconque des revendications précédentes assurant l'étanchéité au niveau d'un pluralité d'orifices de passage d'air (60).

8. Turbomachine (10) comportant un compresseur basse pression (12), un compresseur haute pression (14) et un carter intermédiaire (26) selon la revendication précédente positionné longitudinalement entre le compresseur basse pression et le compresseur haute pression.

## Patentansprüche

1. Auslassventil (48) für ein Turbotriebwerk eines Luftfahrzeugs (10), umfassend eine Auslasspforte (50), die dazu bestimmt ist, um zwischen einer Verschlussposition einer Luftdurchgangsöffnung (60) und einer offenen Position der Öffnung schwenkbar um eine Achse (51) herum montiert zu werden, wobei die Öffnung in einem Zwischengehäuse (26) des Turbotriebwerks angeordnet ist, wobei das Auslassventil eine Dichtungsvorrichtung (70) umfasst, wobei das Auslassventil **dadurch gekennzeichnet ist, dass** die Dichtungsvorrichtung (70) Folgendes umfasst:
- eine Dichtung (72), die konfiguriert ist, um beweglich an dem Zwischengehäuse (26) montiert zu werden, und
- ein Verschiebungssystem (74), das konfiguriert ist, um die Dichtung (72) zwischen einer ersten Position, in der die Dichtung (72) dazu bestimmt ist, gegen die Auslasspforte (50) anzuliegen, wenn die Pforte in Verschlussposition vorliegt, und einer zweiten Position zu verschieben, in der die Dichtung (72) in Bezug auf die Luftdurchgangsöffnung (60) zurückgezogen ist, wenn die Auslasspforte (50) in offener Position vorliegt.

2. Auslassventil nach Anspruch 1, wobei das Verschiebungssystem (74) durch das Öffnen oder das Schließen der Auslasspforte (50) gesteuert wird.

3. Auslassventil nach Anspruch 2, wobei das Verschiebungssystem (74) einen Dichtungsträger (78), der konfiguriert ist, um gleitend in einem Hohlraum (80) montiert zu werden, der in dem Zwischengehäuse (26) angeordnet ist, das in der Luftdurchgangsöffnung (60) mündet, und eine Betätigungsvorrichtung umfasst, die konfiguriert ist, um die Dichtung (72) von der ersten Position hin zu der zweiten Position, wenn sie durch das Öffnen der Auslasspforte (50) betätigt wird, und von der zweiten Position hin zu der ersten Position durchzulassen, wenn sie durch das Schließen der Auslasspforte betätigt wird, wobei die Dichtung (72) in dem Hohlraum (80) des Zwischengehäuses (26) in der zweiten Position aufgenommen wird.

4. Auslassventil nach Anspruch 3, wobei das Verschiebungssystem (74) eine Schubstange (84) umfasst, die konfiguriert ist, um in dem Hohlraum (80) des Zwischengehäuses (26) schwenkbar um eine Achse (86) herum montiert zu werden, wobei die Schubstange (84) an ein Ende auf einer Achse (87) angelenkt ist, die mit dem Träger (78) der Dichtung (72) einstückig ist und an dem anderen Ende durch die Wirkung einer Feder (89), die die Betätigungsvorrichtung bildet, gesteuert wird, wobei die Feder (89) konfiguriert ist, um die Schubstange (84) in eine Position zurückzubringen, wobei die Dichtung (72) in der zweiten Position gehalten wird, wenn die Auslasspforte (50) in offener Position vorliegt, und um durch die Auslasspforte (50) derart komprimiert zu werden, wenn sie in Verschlussposition vorliegt, um die Schubstange (84) in eine Position zu schwenken, wobei die Dichtung (72) in der ersten Position gehalten wird.

5. Auslassventil nach Anspruch 4, umfassend einen Anschlag (90), der konfiguriert ist, um derart an der Auslasspforte (50) befestigt zu werden, um die Feder (89) zu komprimieren, wenn die Auslasspforte (50) in Verschlussposition vorliegt.

6. Auslassventil nach Anspruch 5, wobei die Auslasspforte (50) konfiguriert ist, um in offener Position radial hin zum Inneren des Zwischengehäuses (26) hervorzustehen, wodurch ein Schöpfvolumen definiert wird und der Anschlag (90) dazu bestimmt ist, außerhalb des Schöpfvolumens an der Auslasspforte befestigt zu werden.

7. Zwischengehäuse (26) eines Turbotriebwerks, beinhaltend eine Vielzahl von Auslassventilen (48) nach einem der vorstehenden Ansprüche, die die Dichtheit in Bezug auf eine Vielzahl von Luftdurchgangsöffnungen (60) sicherstellen.

8. Turbotriebwerk (10), umfassend einen Niederdruckkompressor (12), einen Hochdruckkompressor (14) und ein Zwischengehäuse (26) nach dem vorstehenden Anspruch, das in Längsrichtung zwischen dem Niederdruckkompressor und dem Hochdruckkompressor positioniert ist.

## Claims

1. A discharge valve (48) for an aircraft turbomachine (10), comprising a discharge gate (50) intended to be mounted to pivot about an axis (51) between a position for closing an air passage orifice (60) and an open position of said orifice, the orifice being provided in an intermediate casing (26) of the turbomachine, the discharge valve comprising a sealing device (70), the discharge valve being **characterized in that** the sealing device (70) comprises:
- a seal (72) configured to be movably mounted on the intermediate casing (26), and
- a movement system (74) configured to move the seal (72) between a first position in which the seal (72) is intended to bear against the discharge gate (50) when the gate is in the closing position and a second position in which the seal (72) is retracted with respect to the air passage orifice (60) when the discharge gate (50) is in the open position.

2. The discharge valve according to claim 1, in which the movement system (74) is controlled by the opening or closing of the discharge gate (50).

3. The discharge valve according to claim 2, wherein the movement system (74) comprises a seal support (78) configured to be slidably mounted in a cavity (80) provided in the intermediate casing (26) opening into the air passage orifice (60) and an actuator configured to move the seal (72) from the first position to the second position when actuated by the opening of the discharge gate (50) and from the second position to the first position when actuated by the closing of the discharge gate, the seal (72) being housed in the cavity (80) of the intermediate casing (26) in the second position.

4. The discharge valve according to claim 3, wherein the movement system (74) comprises a connecting rod (84) configured to be mounted so as to pivot about an axis (86) in the cavity (80) of the intermediate casing (26), the connecting rod (84) being articulated at one end on an axis (87) secured to the support (78) of the seal (72) and controlled at the other end by the action of a spring (89) forming an actuator, the spring (89) being configured to return the connecting rod (84) to a position in which the seal (72) is held in the second position when the discharge gate (50) is in the open position and to be compressed by the discharge gate (50) when it is in the closing position so as to pivot the connecting rod (84) into a position in which the seal (72) is held in the first position.

5. The discharge valve according to claim 4, comprising a stop (90) configured to be fixed to the discharge gate (50) so as to compress the spring (89) when the discharge gate (50) is in the closing position.

6. The discharge valve according to claim 5, wherein the discharge gate (50) is configured to project radially towards the inside of the intermediate casing (26) in the open position defining a scooping volume and the stop (90) is intended to be fixed to the discharge gate outside said scooping volume.

7. A turbomachine intermediate casing (26) comprising a plurality of discharge valves (48) according to any one of the preceding claims ensuring sealing at the level of a plurality of air passage orifices (60).

8. The turbomachine (10) comprising a low-pressure compressor (12), a highpressure compressor (14) and an intermediate casing (26) according to the preceding claim positioned longitudinally between the low-pressure compressor and the highpressure compressor.
